# EUROPEAN PATENT APPLICATION

(11) **EP 0 933 718 A2**
(43) Date of publication of application: **04.08.1999**
(21) Application number: 99300695.6
(22) Date of filing: 29.01.1999
(51) Int. Cl.: G06K 7/08

(54) **Magnetic writing head**

(30) Priority: 03.02.1998 JP 2235998
(71) Applicant: STAR MICRONICS CO., LTD., Shizuoka-shi, Shizuoka 422-8654 (JP)
(72) Inventor: Masuda, Hisashi, Shizuoka-shi, Shizuoka (JP)
(74) Representative: Kinsler, Maureen Catherine

(57) **Abstract**

Disclosed is a magnetic writing bead (10) for magnetic recording by applying a magnetic field to a magnetic display medium, wherein a plurality of coil units (20) are arranged on surfaces of electrical insulating substrates (11, 12) along end faces of the substrates, the coil units (20) generating the magnetic field in a direction substantially parallel to the surfaces of the substrates and substantially perpendicular to the end faces of the substrates. The coil unit (20) comprises a magnetic layer (23) which serves as a magnetic core, electrical insulating layers (26-29) formed around the magnetic layer (23), and coil layers (21, 22, 24, 25) wound around the magnetic layer (23) with the electrical insulating layers (26-29) between. This constitution makes it possible to easily process lead wires of coils, and achieve high-density recording with a small-sized light weight magnetic writing head.

## Description

The present invention relates to a magnetic writing head for magnetic recording by applying a magnetic field to a magnetic display medium such as a magnetic display sheet.

A card having a magnetic stripe has hitherto achieved widespread use as a bank card, a credit card, an ID card or the like. These days it is known for such a card to also have a magnetic display sheet for displaying invisible information recorded in the magnetic stripe to a user.

The magnetic display sheet includes magnetic particles dispersed in a viscous fluid which are encapsulated in a transparent cell. The magnetic display sheet is roughly grouped into two types: 1) a magnetophoresis type in which an attraction due to a magnetic field causes the magnetic particles to be transferred to a front surface or a back surface; and 2) a magnetic orientation type in which flaky magnetic particles are vertically or horizontally oriented in accordance with a direction of the magnetic field so that an optical reflectance is changed.

A magnetic writing head for use in such a magnetic display sheet is known in which coil units, each comprising a magnetic core and a coil, are assembled one by one as discrete components and then a number of coil units are arrayed linearly or in a matrix form in a head unit (Japanese Unexamined Patent Publications JP-A 8-167112 (1996) and 8-179708 (1996)).

However, when the coil units are constituted as discrete components and the dimensions of magnetic cores and coils and an array pitch of the coil units are designed to be small in order to reduce the size of the head and enhance the recording density, it would cause difficulty in machining the components and insufficiency in processing accuracy, assembly accuracy, and strength of the components or the like, and consequently a cost is increased. A coil wire of the coil unit also becomes superfine, and thus much labor is required for conducting processes of lead wires such as soldering.

Specifically, when the coil units are arrayed in a matrix, a relative transfer accuracy between each unit and the magnetic display sheet would be of importance. A decrease in accuracy may cause a dot shift.

In order to solve a problem of the coil unit comprising such discrete components, there is proposed a magnetic display/write magnetic head including the coil units formed of thin films (Japanese Unexamined Patent Publication JP-A 9-69208 (1997)). This magnetic head forms a linear multipole magnetic core head which is manufactured in the following manner: sequentially forming a first coil layer, a first insulating layer, a magnetic layer, a second insulating layer, a second coil layer, and an adhesive layer on a base film to obtain a single film of magnetic pole, and laminating the plurality of films in a layer thickness direction.

However, since the single film of magnetic pole has two coil terminal, the larger the number of the films of magnetic pole to be laminated, the more the labor required for the processes of the lead wires such as soldering. Moreover, since the films of magnetic pole are separated from each other in structure, it is difficult to apply a wire patterning using a printing technique to the processing of the lead wires. Futhermore, the reduction of the array pitch of the magnetic poles has a certain limitation due to the existence of the base film and the adhesive layer between the adjacent magnetic poles. This magnetic head is therefore unsuitable for high-density recording.

An object of the invention is to provide a magnetic writing head facilitating a lead wire processing of a coil, having a small size and a light weight, capable of a high-density recording.

According to a first aspect of the invention there is provided a magnetic writing head for carrying out magnetic recording by applying a magnetic field to a magnetic display medium as specified in claim 1. Some preferred features are defined in the claims that are dependent on claim 1.

According to the invention, the magnetic layer, electrical insulating layers and coil layers constituting the coil unit are formed on the substrate with the use of a thin or thick film technique, or the like, thereby the coil units can he manufactured in small size with high-accuracy and good reproducibility. There is also no need for providing a thick member such as a base film between the adjacent coil units, thereby array pitches of the coil units may be designed as small as possible.

Furthermore, the coil units can be manufactured on the surfaces of the substrates in large quantity at one time, and at the same time a wiring pattern nay be formed. Accordingly the small-sized high-density multipole magnetic heads can be mass-produced at low cost.

According to another aspect of the invention there is provided a magnetic writing head for carrying out magnetic recording by applying a magnetic field to a magnetic display medium as specified in claim 4. Some preferred features are defined in the claims that are dependent on claim 4.

According to the invention, the magnetic layer, the electrical insulating layers and the coil layers constituting the coil unit are formed on the substrates by the use of the thin or thick film technique or the like. Thus, the coil unit can be manufactured in small size with high-accuracy and good reproducibility. Moreover, the coil layers on the substrates are electrically connected by the anisotropic conductive film. Thus, the three-dimensional coil wound around the magnetic layer can be easily produced. The anisotropic conductive film can also divide functions of both of an electrical conductor and an electrical insulator in a fine region. Thus, the array pitches of the coil units may be designed a small a possible.

Furthermore, the coil units may be manufactured on the surfaces of the substrates in large quantity at one time, and at the same time a wiring pattern may be formed. Thus, the small-sited high-density multipole magnetic heads can be mass-produced at low cast.

In the invention it is preferable that the electrical insulating substrate is provided with individual electrodes for separately supplying currents to each of the coil units and a common electrode for leading in common the currents flowing through the coil units.

According to the invention, the individual electrodes and the common electrode are formed on the electrical insulating substrate by the thin or thick film technique or the like. Thus, the lead wire processing of the coil units is facilitated. Moreover, it is easily realized to make the wiring pattern highly dense in correspondence to a high-density arrangement of the coil units.

Other and further objects, features, and advantages of the invention will be more explicit from the following detailed description taken with reference to the drawings wherein:
Fig. 1 is a perspective view showing a magnetic head apparatus;
Fig. 2 is a front view of a magnetic head apparatus 1 seen from a printing surface 3;
Fig. 3 is a plan view showing a wiring in a magnetic
writing head 10;
Fig. 4 is a sectional view of the magnetic writing head 10 taken along a longitudinal direction of a magnetic layer 23;
Fig. 5 is a partially enlarged view of a portion enclosed by a circle A of Fig. 2;
Figs. 6A to 6G are views for showing steps of a method for manufacturing a coil unit 20 of Fig. 5;
Fig. 7 is a partially enlarged view of a portion enclosed by a circle B of Fig. 3;
Fig. 8 is a partially enlarged view showing another embodiment of the coil unit 20; and
Figs. 9A to 9D are views for showing steps of a method for manufacturing the coil unit 20 of Fig. 8.

Now referring to the drawings, preferred embodiments of the invention are described below.

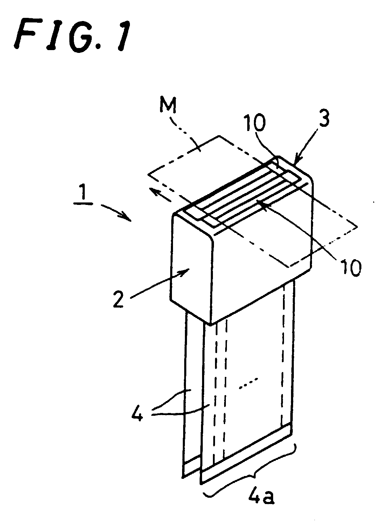

Fig. 1 is a perspective view showing an embodiment of the invention. A magnetic head apparatus 1 comprises magnetic writing heads 10 in each of which are linearly arranged fine coil units which generate dotty magnetic fields; a housing 2 for accomodating a plurality of magnetically writing heads 10 (two heads in Fig. 1) in accordance with a predetermined positional relationship; flexible substrates 4 in which a plurality of lead wires are embedded which are used for separately connecting the coil units of the magnetically writing heads 10.

The magnetic head apparatus 1 has a printing surface 3 opposite to a magnetic display medium M such as a magnetic display sheet. The magnetic display medium M relatively moves in a direction parallel to the printing surface 3 and perpendicular to the direction of array of the coil units while coming into close contact with or into close proximity to the printing surface 3. A terminal portion 4a of the flexible substrate 4 is connected to a head drive circuit through a connector. The head drive circuit selectively passes currents through the coil units in accordance with a print signal sent from a computer or the like. When the currents pass through the coil units, a recording magnetic field perpendicular to the printing surface 3 is generated. A vertical magnetic field is thus applied to the magnetic display medium M, so that magnetic printing is performed in a dot matrix form.

The magnetic writing head 10 may be used in a single form or a combination form of three or more magnetically writing heads. Moreover such a scanning form may be used that the magnetic head apparatus 1 move in a state where the magnetic display medium M is standing still.

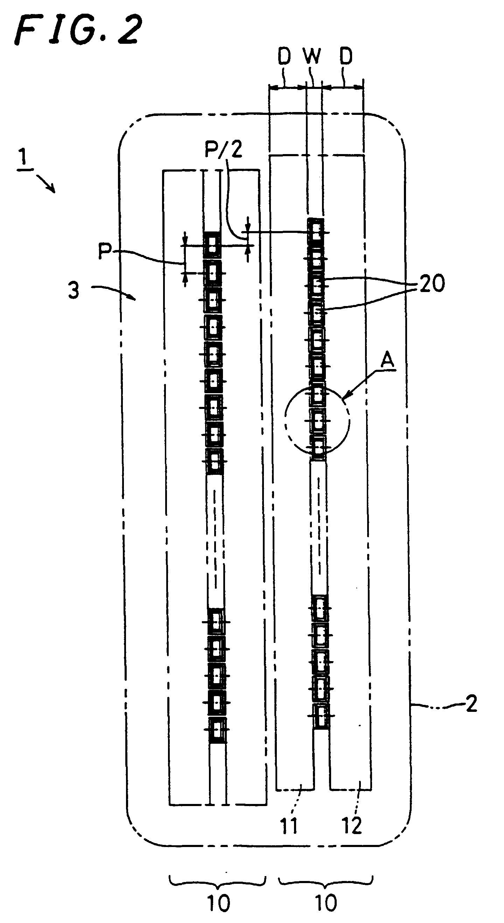

Fig. 2 is a front view of the magnetic head apparatus 1 seen from the printing surface 3. The magnetically writing head 10 is composed of a plurality of coil units 20 linearly arrayed; and electrical insulating substrates 11 and 12 supporting the coil units 20 therebetween. One magnetic writing head 10 is shifted from the other magnetically writing head adjacent thereto by a half of an array pitch P of the coil units 20 so that they are arranged in a staggered grid fashion. Consequently, the two head 10 achieve two times the recording density of a single head 10.

The apparatus can be thinly formed. For sample, the coil unit 20 may have a width W of 0.19 mm, the substrates 11 and 12 may have a thickness D of 0.5 mm and the head 10 may have a width of 1.19 mm. Also, the array pitch P of the coil units 20 is 0.32 mm, for example, thereby allowing a single head 10 alone to perform the magnetic printing whose density is as high as about 80 (=25.4 mm/0.32 mm) dpi (dots per inch).

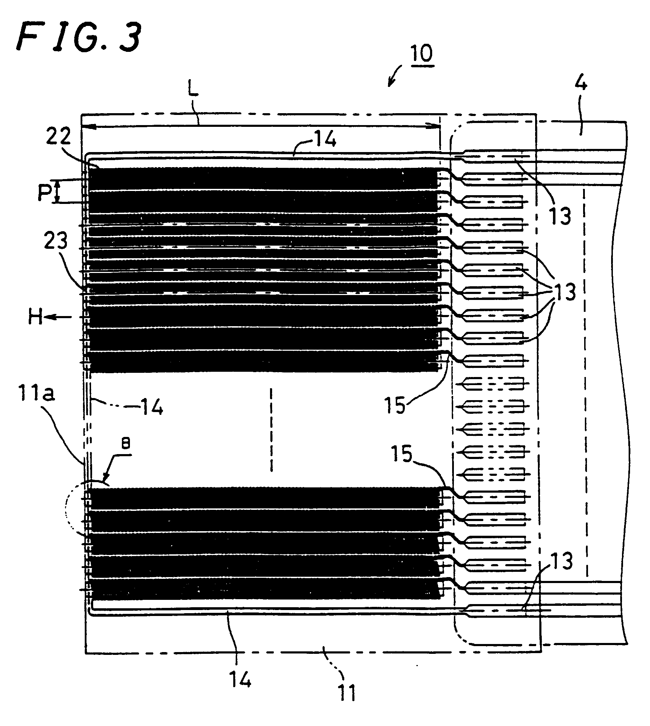

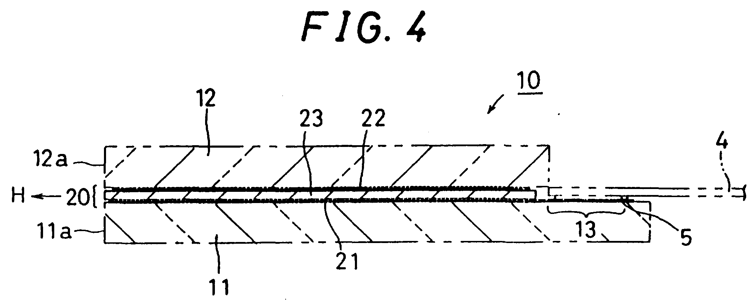

Fig. 3 is a plan view showing a wiring in the magnetic writing head 10. Fig. 4 is a sectional view of the magnetic writing head 10 taken along a longitudinal direction of a magnetic layer 23. The coil unit 20 comprises the magnetic layer 23 which is shaped in a long narrow form and functions as a magnetic core; and coil layers 21 and 22 which is composed of coil wires wound about the longitudinal direction of the magnetic layer 23 as a center axis. A plurality of coil units 20 are arranged at the array pitch P along end faces 11a and 12a of the substrates 11 and 12. A length L of the magnetic layer 23 is 5 mm, for example. The magnetic layer 23 has sectional dimensions of 0.1 mm × 0.2 mm, and the coil units 20 are arranged at coil pitches of 0.05 mm, for example. This arrangement allows a magnetic field H to be generated in the direction substantially parallel to inside surfaces of the substrates 11 and 12 and substantially perpendicular to the end faces 11a and 12a of the substrates 11 and 12.

One end of each coil wire of each coil unit 20 is connected in common to a common electrode 14. Since a large current flows through the common electrode 14, the electrode 14 is formed on the three edges of the substrate 11 in a relatively wide wiring pattern and connected to two terminals 13. The other end of each coil wire of each coil unit 20 is connected to each of as many individual electrodes 15 as the coil units 20. Since the current of one coil only flows through the individual electrode 15, the individual electrodes 15 are formed in a relatively narrow wiring pattern and they are connected to the respective terminals 13.

The terminals 13, the colon electrode 14 and the individual electrodes 15 can be simultaneously formed on the substrate 11 by a thin or thick film technique, or the like. Thus, the lead wires of the coils can be precisely processed with ease. Between the terminals 13 arranged on one end of the substrate 11 and the flexible substrate 4, many lead wires can be connected at one time without making a short circuit by interposing a thermosetting anisotropic conductive film 5 and carrying out heat treatment, with the result of reducing manufacturing costs. Soldering may be also performed in place of the use of the anisotropic conductive film 5.

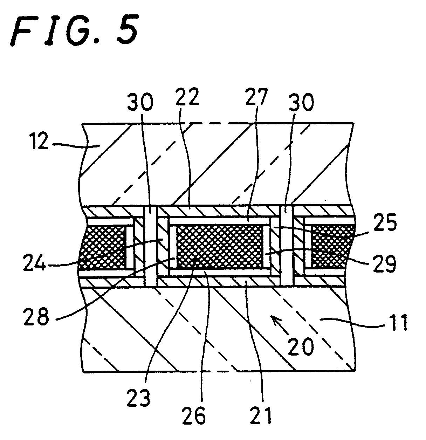

Fig. 5 is a partially enlarged view of a portion enclosed by a circle A of Fig. 2. The coil unit 20 comprises the magnetic layer 23 which serves as the magnetic core; electrical insulating layers 26 to 29 formed on side surfaces of the magnetic layer 23; coil layers 21, 22, 24 and 25 wound around the magnetic layer 23 with the electrical insulating layers 26 to 29 between; and a filling layer 30 for filling a gap between the coil units 20.

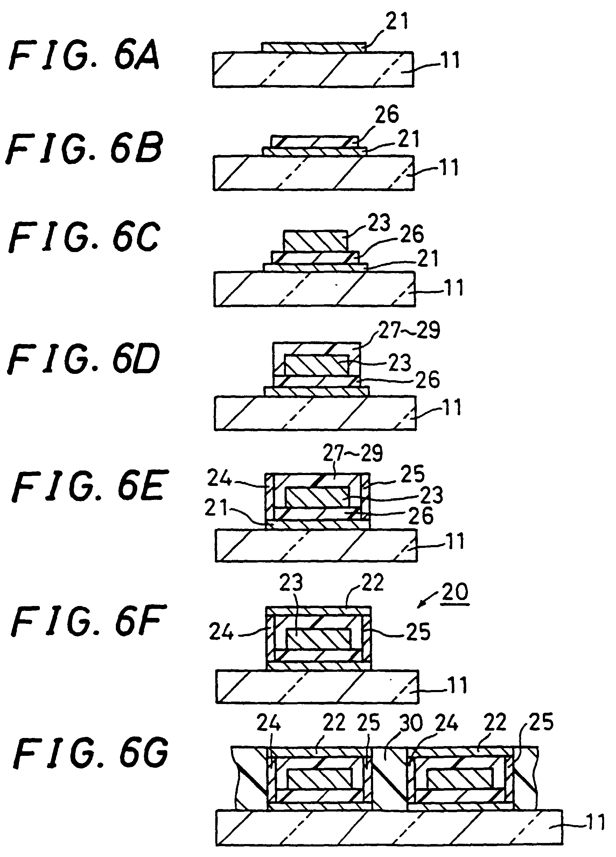

Figs. 6A to 6G are views for showing steps of a method for manufacturing the coil unit 20 of Fig. 5. As shown in Fig. 6A, firstly a conductive material such as copper is vapor-deposited on the substrate 11 such as a glass plate. Then a predetermined pattern is formed by etching, thereby forming the coil layer 21 to be a lower portion of a rectangular coil. At the same time, the terminals 13, the common electrode 14 and the individual electrodes 15 are also formed.

As shown in Fig. 6B, the coil layer 21 is then coated with an electrical insulating material such as a synthetic resin by screen printing, thereby forming the lower electrical insulating layer 26 in a predetermined pattern. As shown in Fig. 6C, a magnetic material such as Fe-Ni is then vapor-deposited on the electrical insulating layer 26 by the use of a mask of a predetermined pattern, thereby forming the magnetic layer 23.

As shown in Fig. 6D, the upper, left and right side surfaces of the magnetic layer 23 are then coated with an electrical insulating material such as a synthetic resin by the screen printing, thereby forming the electrical insulating layers 27 to 29. The side surfaces of the magnetic layer 23 are thus covered with the electrical insulating layers 26 to 29.

As shown in Fig. 6E, a copper film is then precipitated on an exposed portion of the coil layer 21 by electroless copper plating so as to cover the electrical insulating layers 28 and 29, then forming the coil layers 24 and 25 to be the side surface portions of the rectangular coil by etching.

As shown in Fig. 6F, a conductive material such as copper is vapor-deposited on the electrical insulating layer 27 so that the coil layers 24 and 25 can be electrically connected. A predetermined pattern is then formed by etching, thereby forming the coil layer 22 to be an upper portion of the rectangular coil. Thus one coil unit 20 is completed in this manner.

As shown in Fig. 6G, the gaps between the respective coil units 20 are filled with an electrical insulating material such as a synthetic resin, thereby forming the filling layer 30. Then, the substrate 12 such as a glass plate is placed and fixed on the coil units 20, whereby the magnetically writing head 10 is completed. The substrate 12 may be replaced by a coating of an electrical insulating material.

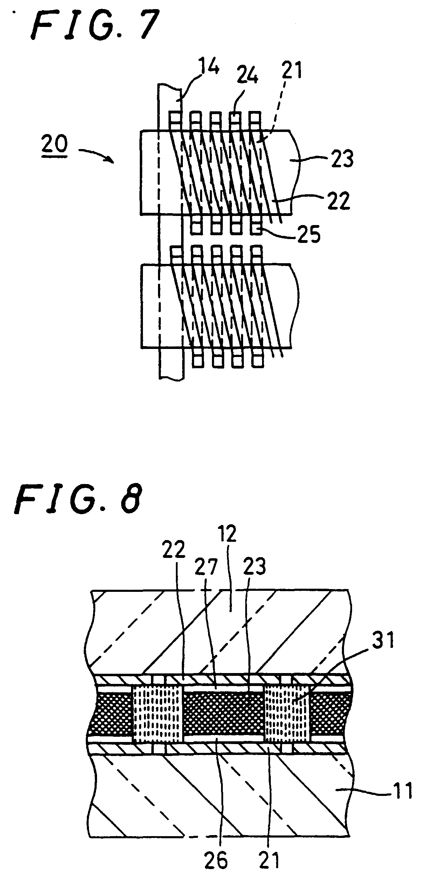

Fig. 7 is a partially enlarged view of a portion enclosed by a circle B of Fig. 3. This is a plan view of the portion near the tip end of the magnetic layer 23 seen from above this portion. The one-turn rectangular coil composed of the coil layers 21, 22, 24 and 25 is wound in series around the long narrow magnetic layer 23. The coil layers 21, 24 and 25 are formed in a surface perpendicular to the longitudinal direction of the magnetic layer 23. The coil layer 22 is inclined with respect to the longitudinal direction of the magnetic layer 23. The coil layer 24 located on the tip end of the magnetic layer 23 is connected to the common electrode 14.

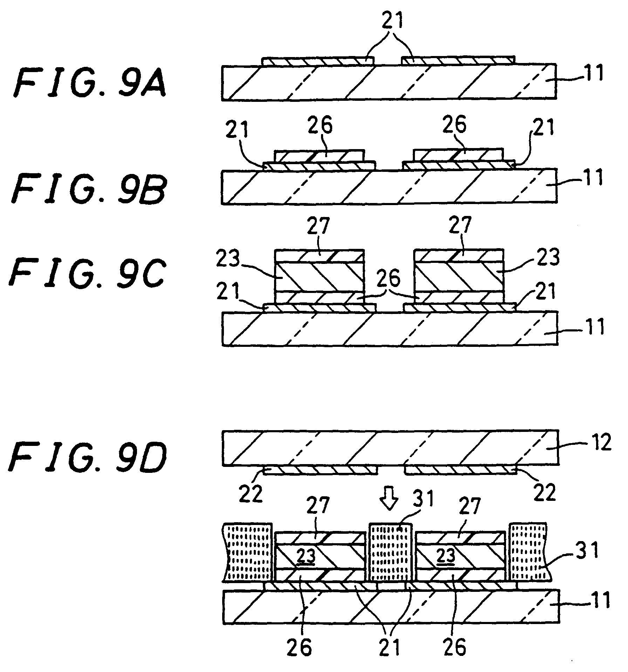

Fig. 8 is a partially enlarged view showing another embodiment of the coil unit 20, corresponding to the circle A of Fig. 2. The coil unit 20 comprises the magnetic layer 23 which serves as a magnetic core; the electrical insulating layers 26 and 27 formed on the lower and upper side surfaces of the magnetic layer 23; a pair of coil layers 21 and 22 formed on the opposite surfaces of the substrates 11 and 12 so that both of the upper and lower faces of the magnetic layer 23 are sandwiched between the coil layers with the electrical insulating layers 26 and 27 between; and an anisotropic conductive film 31 located between the adjacent magnetic layers 23, for electrically connecting the coil layers 21 and 22.

Figs. 9A to 9D are views for showing steps of a method for manufacturing the coil unit 20 of Fig. 8. As shown in Fig. 9A, firstly a conductive material such as copper is vapor-deposited on the substrate 11 such as a glass plate. Then a predetermined pattern is formed by etching, thereby forming the coil layer 21 to be the lower portion of the rectangular coil. At the sea time, the terminals 13, common electrode 14 and individual electrodes 15 are also formed.

As shown in Fig. 9B, the coil layer 21 is then coated with an electrical insulating material such as a synthetic resin by the screen printing, thereby forming the lower electrical insulating layer 26 in a predetermined pattern. As shown in Fig. 9C, the magnetic material such as Fe-Ni is then vapor-deposited on the electrical insulating layer 26 by the use of the mask of a predetermined pattern, thereby forming the magnetic layer 23. Next, the upper side surface of the magnetic layer 23 is coated with an electrical insulating material such as a synthetic resin by the screen printing, thereby forming the electrical insulating layer 27. The lower and upper side surfaces of the magnetic layer 23 are thus covered with the electrical insulating layers 26 and 27.

As shown in Fig. 9D, the anisotropic conductive film 31, which has such a shape that it comes into contact with the coil layer 21, is then attached to the gap between the magnetic layer 23 and an adjacent one. The coil layer 22 to be the upper portion of the rectangular coil is also formed on the other substrate 12 by vapor deposition and etching. This substrate 12 is disposed with a downward pressure, whereby portions of the anisotropic conductive film 31 pressed by the coil layers 21 and 22 exhibit electrical conductivity, and thus these portions constitute the side surface portions of the rectangular coil. A center portion of the anisotropic conductive film 31 and the portions bearing no coil layers 21 and 22 exhibit electrical insulation properties. This prevents occurrence of a short circuit between the coil units 20 and between the one-turn coils. When the thermosetting anisotropic conductive film is used as the anisotropic conductive film 31, the film is set by the heat treatment. Thus one coil unit 20 is completed in this manner.

As the thin and thick film techniques described above may be used vapor deposition, sputtering, ion-plating, chemical vapor deposition, plating, printing, etching, photolithography or the like as needed. The use of the techniques such as thin and thick film techniques makes it possible to simultaneously manufacture many coil units 20 and wiring patterns. Large quantities of small-sized high-density multipole magnetic heads can be manufactured at low cost by a high-accuracy fine processing.

Although an exemplary constitution of the coil unit 20 has been described in conjunction with Figs. 5 and 8, a magnetic shield layer or a yoke layer for preventing magnetic leakage from the coil unit 20 may be also incorporated in the apparatus.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A magnetic writing head (1) for carrying out magnetic recording by applying a magnetic field to a magnetic display medium (M), comprising a plurality of coil units (20) arranged on a surface of an electrical insulating substrate (11, 12) for generating magnetic fields wherein each of the coil units (20) is composed of a magnetic layer (23) as a magnetic core, electrical insulating layers (26-29) formed around the magnetic layer, and coil layers (21, 22, 24, 25) wound around the magnetic layer with the electrical insulating layers between.

2. The magnetic writing head of claim 1, wherein the electrical insulating substrate (11) is provided with individual electrodes (15) for separately supplying currents to each of the coil units and a common electrode (14) for leading in common the currents flowing through the coil units.

3. The magnetic writing head of claim 1 or claim 2, wherein the plurality of coils is adapted to generate a magnetic field in a direction substantially parallel to the surface of the substrate and substantially perpendicular to an end face thereof.

4. A magnetic writing head (1) for carrying out magnetic recording by applying a magnetic field to a magnetic display medium (M), comprising a plurality of coil units (20) arranged between a pair of electrical insulating substrates (11, 12), for generating magnetic fields, wherein each of the coil units (20) is composed of a magnetic layer (23) as a magnetic core, electrical insulating layers (26, 27) formed on opposite surfaces of the magnetic layer facing the substrates, a pair of coil layers (21, 22) each formed on opposite surfaces of the substrates so that the magnetic layer is sandwiched between the pair of coil layers with the electrical insulating layers between, and an anisotropic conductive film (31) interposed between the adjacent magnetic layers so as to electrically connect the coil layers.

5. The magnetic writing head of claim 4, wherein the electrical insulating substrates (11) are provided with individual electrodes (15) for separately supplying currents to each of the coil units and a common electrode (14) for leading in common the currents flowing through the coil units.

6. The magnetic writing head of claim 4 or claim 5, wherein the plurality of coils is adapted to generate magnetic fields in a direction substantially parallel to the surface of the substrate and substantially perpendicular to an end face thereof.
